# EUROPEAN PATENT APPLICATION

(11) **EP 4 495 602 A1**
(43) Date of publication of application: **22.01.2025**
(21) Application number: 23770357.4
(22) Date of filing: 27.02.2023
(51) Int. Cl.: G01N 35/02, G01N 35/00

(54) **TEST DEVICE**

(30) Priority: 17.03.2022 JP 2022043028
(71) Applicant: FUJIFILM Corporation, Tokyo 106-8620 (JP)
(72) Inventor: MIURA, Yoshinobu, Ashigarakami-gun, Kanagawa 258-8538 (JP); DENAWA, Tatsuyuki, Ashigarakami-gun, Kanagawa 258-8538 (JP)
(74) Representative: Dehns Germany Partnerschaft mbB
(86) International application number: PCT/JP2023/007050
(87) International publication number: WO 2023/176398

(57) **Abstract**

An examination apparatus includes: a detecting unit that executes a detecting process of detecting a target substance in a specimen; a mixing unit that executes a mixing process of mixing particles and a liquid in a reaction cell, the mixing process being performed on the specimen to be provided to the detecting process before the detecting process; a first camera that captures an image of a mixed liquid obtained by mixing the particles and the liquid in the reaction cell; and a processor that determines a state of mixture between the particles and the liquid on the basis of the image of the mixed liquid captured by the first camera. The processor is configured to execute the detecting process of the target substance using the detecting unit in a case of determining that the state of mixture is favorable.

## Description

### BACKGROUND OF THE INVENTION

### 1. Field of the Invention

The present disclosure relates to an examination apparatus.

### 2. Description of the Related Art

An examination apparatus that quantitatively or qualitatively detects a target substance in a specimen has been known. Many of such examination apparatuses use an immunoassay principle, and examples thereof include a chemiluminescent enzyme immunological analysis apparatus and a fluorescence immunological analysis apparatus (for example, JP2016-085093A).

Such an examination apparatus performs a detecting process of detecting a target substance in a specimen by detecting luminescence or fluorescence based on a label such as an enzyme label or a fluorescent label imparted to the target substance in the specimen by using an immunoreaction. Further, before such a detecting process of the target substance, a pre-process such as labeling the target substance in the specimen is performed on the specimen. In some cases, the examination apparatus is configured to automatically execute the pre-process and the detecting process and output the detection result in a case where the pre-process and the detecting process are automated and a specimen collection container accommodating the collected specimen is loaded.

In order to impart a label to the target substance in the specimen, for example, such an automated examination apparatus performs the following process using magnetic particles. First, in the reaction cell, the magnetic particles modified with the first binding substance (for example, the primary antibody) to specifically bind to the target substance (for example, the antigen) and the specimen are mixed with each other. Therefore, the target substance and the first binding substance are bound to each other to generate an immune complex. Thereby, the target substance is captured by the magnetic particles via the first binding substance. Thereafter, the immune complex is separated from the immune complex and a component derived from the specimen (unreacted substance) that does not form the immune complex, that is, so-called bound free (B/F) separation is performed. In a case of the B/F separation, the mixed liquid is suctioned in a state where the magnetic particles are temporarily adsorbed to an inner wall surface of the reaction cell by a magnet disposed outside the reaction cell. Thereafter, the cleaning liquid is discharged to the reaction cell, and the mixed liquid is suctioned and discharged in a state where the cleaning liquid and the magnetic particles are mixed. Therefore, the magnetic particles are cleaned. Next, a labeling reagent including a second binding substance (for example, a secondary antibody) to specifically bind to the target substance and the second binding substance bound to the label are mixed with the magnetic particles. Thereby, the target substance and the second binding substance captured on the magnetic particles via the first binding substance are bound to each other, whereby the sandwich type immune complex, in which the target substance is interposed between the first binding substance and the second binding substance, is generated. Thereafter, the magnetic particles are cleaned again by mixing the cleaning liquid and the magnetic particles for the B/F separation. In a case where the label is an enzyme label, the magnetic particles and the reagent including a luminescent substrate are further mixed and used for the examination process.

In such a manner, in the automated examination apparatus, a mixing process of mixing particles and a liquid, such as mixing of magnetic particles and a specimen, mixing of magnetic particles and a cleaning liquid, mixing of magnetic particles and a labeling reagent, or mixing of magnetic particles and a luminescent reagent, is executed.

In the mixing process, first, the specimen liquid is suctioned from the specimen collection container by the built-in sampling nozzle, and the suctioned specimen liquid is discharged to the reaction cell loaded in the examination apparatus. Then, in the reaction cell, the particles and the liquid are mixed with each other.

In the mixing process, in a case where a suction amount of specimen suctioned through the sampling nozzle is not sufficient or in a case where a foreign substance is mixed into the suctioned specimen, the amount of specimen used in the subsequent pre-process and a detecting process is reduced. In a case where the amount of specimen is small, a detection accuracy in the detecting process is reduced. As a result, the reliability of the examination result is reduced.

On the other hand, JP2005-345345A discloses a dispenser that performs suction and discharge of a liquid, the dispenser accurately dispensing a certain amount of dispensed liquid by capturing an image of a dispensed liquid. In a case where the technique disclosed in JP2005-345345A is adopted in the examination apparatus, it is considered that the amount of specimen used in the detecting process can be kept constant, and the reliability of the examination result can be improved.

### SUMMARY OF THE INVENTION

However, as described above, even in a case where the amount of specimen to be discharged to the reaction cell can be kept constant, the reliability may be reduced in a case where the mixing of the magnetic particles and the specimen, or the mixing of particles and a liquid such as the magnetic particles and the cleaning liquid is not sufficient. For example, in a case where the mixing process is insufficient and the formation of the immune complex cannot be sufficiently achieved in the mixing process performed in the reaction cell, the reliability for the quantification is reduced. Further, in a case where the immune complex and the cleaning liquid are not sufficiently mixed in the B/F separation, sufficient B/F separation cannot be performed, and the signal noise (S/N) of the present examination is reduced.

The present disclosure has been made in view of the above circumstances, and an object of the present disclosure is to provide an examination apparatus that improves the reliability of the examination result as compared with the related art.

An examination apparatus according to an aspect of the present disclosure comprises:
a detecting unit that executes a detecting process of detecting a target substance in a specimen;
a mixing unit that executes a mixing process of mixing particles and a liquid in a reaction cell, the mixing process being performed on the specimen to be provided to the detecting process before the detecting process;
a first camera that captures an image of a mixed liquid obtained by mixing the particles and the liquid in the reaction cell; and
a processor that determines a state of mixture between the particles and the liquid on the basis of the image of the mixed liquid captured by the first camera,
in which the processor is configured to execute the detecting process of the target substance using the detecting unit in a case of determining that the state of mixture is favorable.

The examination apparatus according to the aspect of the present disclosure may further comprise: a first notification unit that notifies a user that the state of mixture is unfavorable, in which the processor is configured to cause the first notification unit to notify the user that the state of mixture is unfavorable and to end an examination in a case of determining that the state of mixture is unfavorable.

In the examination apparatus according to the aspect of the present disclosure, the processor may be configured to determine the state of mixture on the basis of variation in concentration which is generated in the image of the mixed liquid in accordance with dispersion of the particles in the mixed liquid.

In the examination apparatus according to the aspect of the present disclosure, the processor may be configured to determine the state of mixture on the basis of whether or not air bubbles are present in the mixed liquid in the image or an amount of the air bubbles in addition to the variation in concentration which is generated in the image of the mixed liquid.

In the examination apparatus according to the aspect of the present disclosure, the processor may be configured to determine the state of mixture on the basis of whether or not air bubbles are present in the mixed liquid in the image or an amount of the air bubbles.

In the examination apparatus according to the aspect of the present disclosure, the particles may be magnetic particles.

An examination apparatus according to the aspect of the present disclosure may further comprise: a specimen dispensing unit that has a sampling nozzle through which the specimen is suctioned and the specimen is discharged to the reaction cell; and a second camera that captures an image of the sampling nozzle in a state of holding the specimen after the specimen is suctioned through the sampling nozzle and before the specimen is discharged to the reaction cell, in which the processor may be configured to determine a state of the specimen in the sampling nozzle on the basis of the image of the sampling nozzle captured by the second camera.

In the examination apparatus according to the aspect of the present disclosure, the processor may be configured to cause the sampling nozzle to discharge the specimen to the reaction cell in a case of determining that the state of the specimen is normal.

The examination apparatus according to the aspect of the present disclosure may further comprise: a second notification unit that notifies a user that the state of the specimen is unfavorable, in which the processor may be configured to cause the second notification unit to notify the user that the state of the specimen is unfavorable in a case of determining that the state of the specimen is unfavorable.

In the examination apparatus according to the aspect of the present disclosure, the specimen dispensing unit may include a moving mechanism that moves the sampling nozzle from a suction position for suctioning the specimen to a discharge position for discharging the specimen to the reaction cell, and the second camera may capture an image of the sampling nozzle which is being moved by the moving mechanism.

In the examination apparatus according to the aspect of the present disclosure, the second camera may be a line scan camera.

In the examination apparatus according to the aspect of the present disclosure, it is preferable that the detecting unit detects the target substance by detecting luminescence or fluorescence from a label attached to the target substance using an antigen-antibody reaction.

According to the technology of the present disclosure, it is possible to provide an examination apparatus in which the reliability of an examination result is improved as compared with the related art.

### BRIEF DESCRIPTION OF THE DRAWINGS

Fig. 1 is a configuration diagram of an examination apparatus 10 according to a first embodiment.
Fig. 2A is a top view of a cartridge, and Fig. 2B is a front view thereof.
Fig. 3 is a diagram showing a step of imparting a label to a target substance in a reaction cell.
Fig. 4 is a diagram for describing a cleaning step.
Fig. 5 is a diagram showing disposition of a first camera with respect to the reaction cell.
Fig. 6 is a schematic diagram of a captured image by the first camera.
Fig. 7 is a diagram showing an examination flow according to an example of the examination apparatus 10.
Fig. 8 is a configuration diagram of an examination apparatus 110 according to a second embodiment.
Fig. 9 is a diagram showing disposition of a second camera with respect to a sampling nozzle.
Fig. 10 is a schematic diagram of a captured image by the second camera.
Fig. 11 is a diagram showing an examination flow according to an example of the examination apparatus 110.

### DESCRIPTION OF THE PREFERRED EMBODIMENTS

Hereinafter, an examination apparatus according to an embodiment of the present disclosure will be described with reference to the drawings. In each of the drawings, constituent elements represented by the same reference numerals mean the same constituent elements. However, unless otherwise specified in the specification, each constituent element is not limited to one, and each constituent element may be plural.

### "Examination Apparatus according to First Embodiment"

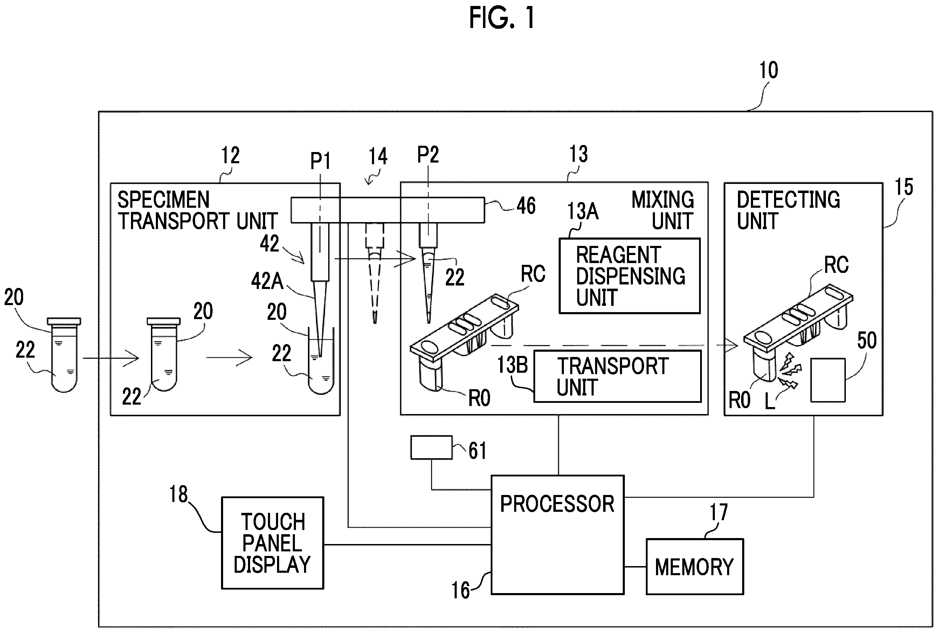

Fig. 1 is a schematic view showing a configuration of an immunological analysis apparatus which is an example of an examination apparatus 10 according to a first embodiment of the present disclosure. The examination apparatus 10 is an automatic immunological analysis apparatus that performs a pre-process of imparting a label to a target substance that is a substance to be detected in the specimen, performs a detecting process of detecting light from the label, and outputs a detection result, after a specimen collection container that accommodates a specimen collected from a biological body is loaded.

The examination apparatus 10 includes a specimen transport unit 12, a mixing unit 13, a specimen dispensing unit 14, a detecting unit 15, a processor 16, a memory 17, and a touch panel display 18.

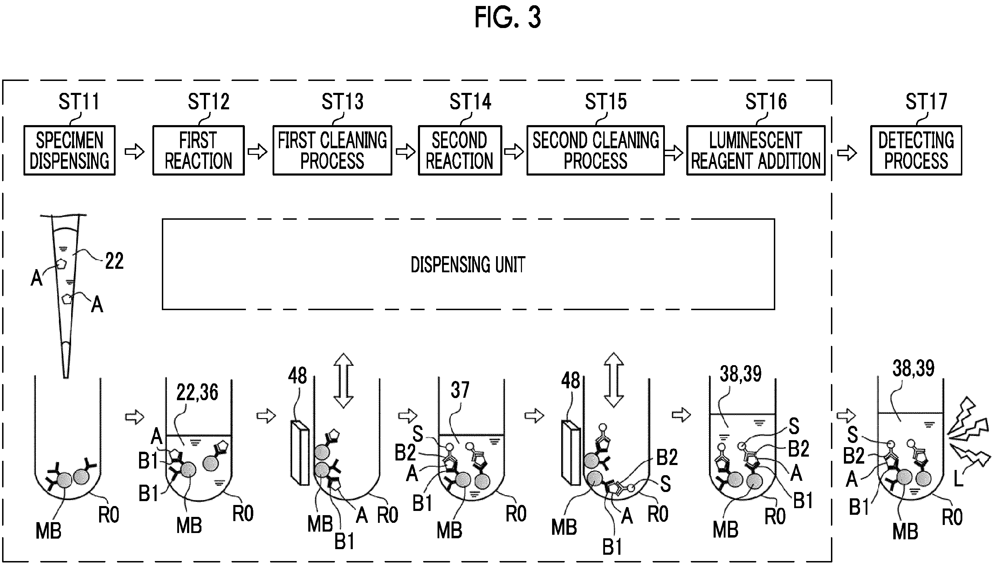

The detecting unit 15 executes a detecting process of detecting a target substance A (refer to Fig. 3 and the like) in a specimen 22. The detecting unit 15 includes a photodetector 50 such as a photomultiplier tube or a photodiode. The photodetector 50 is disposed to face a reaction cell R0 and detects light L caused by a label S bound to the target substance A. In the present example, an enzyme is used as the label S to detect chemiluminescence that is generated by reacting with the luminescent substrate.

A processor 16 integrally controls each unit of the examination apparatus 10. An example of the processor 16 is a central processing unit (CPU) that performs various types of control by executing a program. The CPU functions as a control unit that controls each unit by executing a program.

Further, the processor 16 acquires information about a light amount of the light L detected by the photodetector 50 and calculates a concentration of the target substance A on the basis of the information about the light amount.

A memory 17 is an example of a memory connected to or built into the CPU as the processor 16. For example, the memory 17 stores a control program. In addition to the control program, the memory 17 stores setting information that is preset in order for the processor 16 to perform the various types of control.

Further, the memory 17 stores information indicating a correspondence relationship between the light amount of the light L detected by the photodetector 50 and an amount of the target substance A. The correspondence relationship is stored, for example, as a calibration curve represented by a function. The correspondence relationship may be a format of a table. The processor 16 calculates the amount of the target substance A from, for example, the light amount of the light L, which is acquired from the photodetector 50, and the calibration curve stored in the memory 17.

The touch panel display 18 receives an operation instruction, such as an instruction to start an examination (hereinafter, referred to as an examination start instruction) by a user. Further, the touch panel display 18 displays information such as an examination result.

The specimen transport unit 12 has a loading section (not shown in the drawing) into which a specimen collection container 20 for accommodating the specimen 22 is loaded, and transports the loaded specimen collection container 20 to a position accessible by a sampling nozzle 42 of the specimen dispensing unit 14 to be described later.

The specimen 22 is, for example, a biological fluid such as blood collected from a biological body. Hereinafter, a case where the specimen 22 is blood will be described, but the specimen is not limited to blood. In the present embodiment, the specimen collection container 20 is a blood collection tube. For example, in a case where the blood is whole blood, the whole blood is subjected to component separation into blood cells and blood plasma or into a blood clot and serum through the centrifugal separation process or the like, and the blood plasma or the serum is used for examination of the target substance. The target substance, which can be included in the specimen 22 and which is a target of the examination, is, for example, an antigen, an antibody, a protein, or a low-molecular-weight compound.

The mixing unit 13 executes a mixing process of mixing the particles and the liquid in the reaction cell R0, which is performed on the specimen 22 before the detecting process is performed, to be used in the detecting process. The mixing process will be described later. The mixing unit 13 includes a loading section (not shown in the drawing) into which a cartridge RC having a plurality of cells including the reaction cell R0 is loaded, and a reagent dispensing unit 13A. The cartridge RC is provided with cells R1 to R4 for accommodating various reagents in addition to the reaction cell R0, and openings 30 to 34 of the cells R1 to R4 are sealed with a sealing film (not shown in the drawing). The reagent dispensing unit 13A is provided with a perforating nozzle having a perforating function of piercing the sealing film provided in the cartridge RC to open a hole. The mixing process is executed by repeating the suction and the discharge of the liquid into which the particles are mixed in the reaction cell R0 by the perforating nozzle of the reagent dispensing unit 13A.

Further, the mixing unit 13 includes a transport unit 13B. The transport unit 13B transports the cartridge RC to a location at which each process step in the mixing unit 13 is executed. Further, the transport unit 13B transports the cartridge RC from the mixing unit 13 to the detecting unit 15.

The specimen dispensing unit 14 performs a specimen dispensing process of suctioning the specimen 22 from the specimen collection container 20 and discharging the specimen 22 to the cartridge RC loaded in the mixing unit 13. The specimen dispensing unit 14 includes a sampling nozzle 42 and a moving mechanism 46 that moves the sampling nozzle 42. The moving mechanism 46 moves the sampling nozzle 42 in a vertical direction and a horizontal direction. The movements of the sampling nozzle 42 in the vertical direction and the horizontal direction each are performed by a linear actuator as an example.

Further, for example, the sampling nozzle 42 includes a nozzle body and a chip 42Athat is interchangeably attached to a distal end of the nozzle body. The chip 42A is replaced in order to prevent contamination from being caused by a plurality of liquids. The chip 42A is a single-use type and is disposable. The chip 42A of the sampling nozzle 42 is replaced for each specimen 22.

The moving mechanism 46 moves the sampling nozzle 42 in the horizontal direction between a specimen suction position P1 of the specimen transport unit 12 and a specimen discharge position P2 of the mixing unit 13. The specimen suction position P1 is a position at which the specimen 22 is suctioned from the specimen collection container 20. The specimen discharge position P2 is a position at which the specimen 22 is discharged to the reaction cell R0 of the cartridge RC which is set in the mixing unit 13.

Further, at each of the specimen suction position P1 and the specimen discharge position P2, the moving mechanism 46 moves the sampling nozzle 42 in the vertical direction between an entrance position at which the chip 42A enters the specimen collection container 20 or the reaction cell R0 and a retreat position at which the chip 42A retreats from the specimen collection container 20 or the reaction cell R0. The liquid is suctioned and discharged through the sampling nozzles 42 at the entrance position.

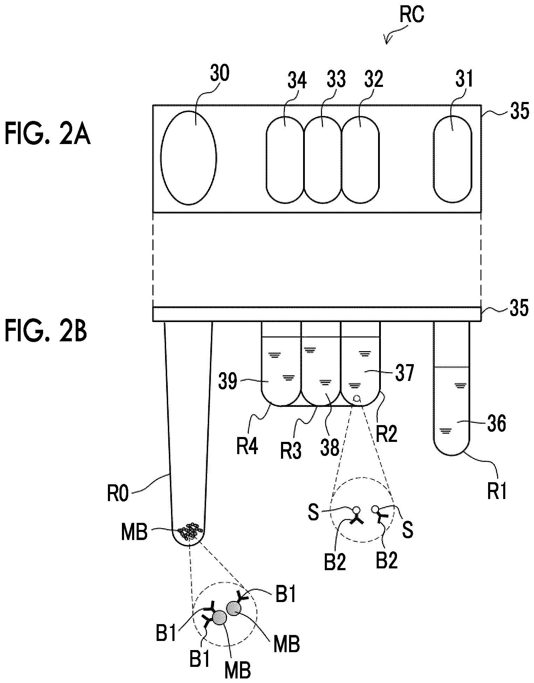

Figs 2A and 2B are schematic views of the cartridge RC, in which Fig. 2A is a top view of the cartridge RC and Fig. 2B is a front view of the cartridge RC. The cartridge RC includes a plate-shaped connection portion 35 having five openings 30 to 34, and five tubular cells R0 to R4 each having one end of each of the openings 30 to 34 and extending downward to include the reaction cell R0. The cartridge RC has a configuration in which a plurality of cells R0 to R4 are integrated by the connection portion 35. Among the plurality of cells R0 to R4, the reaction cell R0 and the cell R1 disposed at both ends are longer than the other cells R2 to R4. The reaction cell R0 is the longest.

Before use, the openings 30 to 34 of the cartridge RC are covered with the sealing film (not shown in the drawing). The cartridge RC is loaded in the examination apparatus 10 in advance, and one cartridge RC is used for one specimen 22.

The specimen 22 is dispensed to the reaction cell R0. The reaction cell R0 is a cell in which a process of imparting the label to the target substance in the specimen 22 is performed. The reaction cell R0 accommodates a plurality of magnetic particles MB on which a first binding substance B 1 to specifically bind to the target substance is modified. In the reaction cell R0, the mixing process of mixing the magnetic particles MB and the liquid is performed. The mixing process of mixing the particles (here, the magnetic particles MB) and the liquid is a process of imparting the label to the target substance in the specimen 22. In a case where the magnetic particles MB each have a spherical shape, a diameter thereof is in a range of 0.1 to 10 µm, preferably 0.1 to 5 µm, and more preferably about 1 to 3 µm.

The cell R1 accommodates a buffer solution 36. The cell R2 accommodates a labeling reagent 37 including the label S in which a second binding substance B2 to specifically bind to the target substance is modified. A first luminescent reagent 38 is accommodated in the cell R3, and a second luminescent reagent 39 is accommodated in the cell R4. In the present example, the label S is an enzyme, and the label S emits light in presence of the first luminescent reagent 38 and the second luminescent reagent 39. The buffer solution 36 in the cell R1, the labeling reagent 37 in the cell R2, the first luminescent reagent 38 in the cell R3, and the second luminescent reagent 39 in the cell R4 are simply referred to as a reagent in a case where it is not necessary to distinguish the respective liquids.

The first binding substance B1 and the second binding substance B2, which specifically bind to the target substance, each are, for example, an antibody against an antigen in a case where the target substance is the antigen, an antigen against an antibody in a case where the target substance is the antibody, and an aptamer against a protein or a low-molecular-weight compound in a case where the target substance is the protein or the low-molecular-weight compound. The first binding substance B1 and the second binding substance B2 may be the same as or may be different from each other.

Here, a process of adding the label to the target substance in the specimen 22 in the reaction cell R0 will be described with reference to Fig. 3. A step surrounded by a broken line in Fig. 3 is a step performed in the mixing unit 13. Fig. 3 schematically shows reaction in the reaction cell R0. Here, a case where the specimen 22 includes the target substance A will be described.

First, the specimen 22, which is held by the sampling nozzle 42, is dispensed to the reaction cell R0 accommodating the magnetic particles MB modified with the first binding substance B1 (Step ST11). Although not shown in the drawing, before the specimen 22 is dispensed, the buffer solution 36 accommodated in the cell R1 is dispensed to the reaction cell R0.

In the reaction cell R0, the magnetic particles MB, the specimen 22, and the buffer solution 36 are mixed with one another. The mixing process of mixing the magnetic particles MB, the specimen 22, and the buffer solution 36 is an example of a mixing process of mixing particles (here, the magnetic particles MB) and a liquid (here, the specimen 22 and the buffer solution 36) in the reaction cell R0. Hereinafter, the mixing process is referred to as a first mixing process. It should be noted that in the mixed liquid (hereinafter, referred to as a first mixed liquid) including the magnetic particles MB, the specimen 22, and the buffer solution 36, as a first reaction, a binding reaction, in which the target substance A in the specimen 22 and the first binding substance B1 are specifically bound to each other, occurs (Step ST12). For example, in a case where the target substance A is an antigen, the first binding substance B1 is an antibody, and both the target substance A and the first binding substance B1 are bound to each other through an antigen-antibody reaction. In the first reaction, the target substance A in the specimen 22 binds to the first binding substance B1. Therefore, the target substance A is captured by the magnetic particles MB with the first binding substance B1 interposed therebetween.

Next, a first cleaning process (B/F separation) of removing an unreacted substance other than the target substance A, which is captured by the magnetic particles MB, is performed (Step ST13). In Step ST13 in Fig. 3, both arrows in the up-down direction shown at an upper portion of the reaction cell R0 schematically indicate a state where the discharge of the liquid in the reaction cell R0 and the supply of the liquid to the reaction cell R0 are performed.

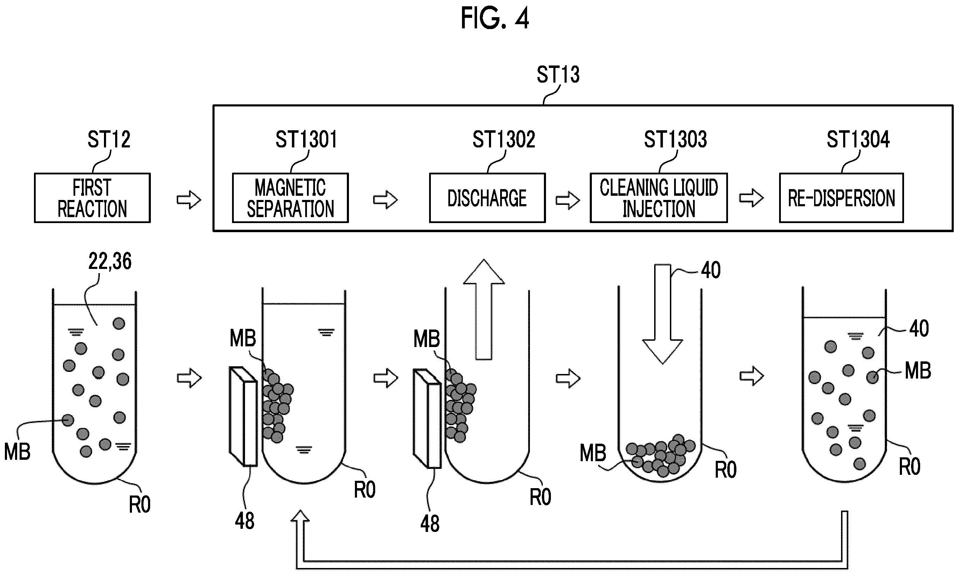

Details of the first cleaning process (Step ST13) will be described with reference to Fig. 4. Fig. 4 does not show the target substance A and the first binding substance B1.

The magnet 48 is disposed close to the outside of the reaction cell R0 in which the first reaction (Step ST12) is completed. Thereby, the magnetic particles MB in the reaction cell R0 are attracted to the magnet 48 and are collected on an inner wall surface of a side wall disposed close to the magnet 48, and magnetic separation of separating the magnetic particles MB and the liquid is performed (Step ST1301).

The liquid in the reaction cell R0 is discharged in a state where the magnetic particles MB are attracted to the inner wall surface of the reaction cell R0 (Step ST1302).

After the liquid is discharged from the reaction cell R0, the reaction cell R0 and the magnet 48 are separated from each other. In such a case, the reaction cell R0 and the magnet 48 are separated from each other such that magnetic force of the magnet 48 does not affect the magnetic particles MB in the reaction cell R0. Then, the cleaning liquid 40 is injected into the reaction cell R0 (Step ST1303).

After the cleaning liquid 40 is injected into the reaction cell R0, the mixed liquid (hereinafter, referred to as a second mixed liquid) in which the cleaning liquid 40 and the magnetic particles MB are mixed with each other is suctioned and discharged, and the magnetic particles MB are re-dispersed in the cleaning liquid 40 (Step ST1304). In the first cleaning process (Step ST13), the mixing process of mixing the magnetic particles MB and the cleaning liquid 40 is an example of a mixing process of mixing particles (here, the magnetic particles MB) and a liquid (here, the cleaning liquid 40) in the reaction cell. Hereinafter, the mixing process is referred to as a second mixing process.

By repeating the steps from the magnetic separation (Step ST1301) to the redispersion (Step 1304) a plurality of times (for example, about 3 times), the unreacted substance other than the target substance A, which is captured by the magnetic particles MB, is removed. The B/F separation is performed by the above-mentioned cleaning step, and the magnetic particles MB and the target substance A, which is captured by the magnetic particles MB, remain in the reaction cell R0.

Returning to Fig. 3, the labeling reagent 37 accommodated in the cell R2 is dispensed to the reaction cell R0 subjected to the B/F separation as described above, and the magnetic particles MB and the labeling reagent 37 are mixed with each other. The mixing process of mixing the magnetic particles MB and the labeling reagent 37 is an example of a mixing process of mixing particles (here, the magnetic particles MB) and a liquid (here, the labeling reagent 37) in the reaction cell R0. Hereinafter, the mixing process is referred to as a third mixing process.

In the mixed liquid (hereinafter, referred to as a third mixed liquid) including the labeling reagent 37 and the magnetic particles MB, as the second reaction, a binding reaction, in which the target substance A captured by the magnetic particles MB and the second binding substance B2 specifically bind to each other, occurs (Step ST14). Thereby, the target substance A is interposed between the first binding substance B1 and the second binding substance B2, and the label S is applied to the target substance A with the second binding substance B2 interposed therebetween. For example, in a case where the target substance A is an antigen, the second binding substance B2 is an antibody, and both of the antigen and antibody are bound to each other through the antigen-antibody reaction. That is, in such a case, the label S is applied to the target substance A by using the antigen-antibody reaction.

Next, a second cleaning step (B/F separation) of removing the unreacted substance other than the second binding substance B2 which is bound to the target substance A and captured by the magnetic particles MB in the labeling reagent 37 is performed (Step ST15). In the second cleaning process (Step ST15), the two-way arrow in the up-down direction shown above the reaction cell R0 schematically indicates a state where the liquid in the reaction cell R0 is discharged and the liquid is supplied to the reaction cell R0, as in a case of Step ST13.

The second cleaning process (Step ST15) is performed in the same manner as the cleaning step performed in the first cleaning process (Step ST13). That is, the magnetic separation is performed by disposing the magnet 48 close to the reaction cell R0, the liquid in the reaction cell R0 is discharged, the cleaning liquid 40 is injected, and the magnetic particles MB are re-dispersed in the cleaning liquid 40 (refer to Fig. 4). In the second cleaning process (Step ST15), the mixing process of mixing the magnetic particles MB and the cleaning liquid 40 is an example of a mixing process of mixing particles (here, the magnetic particles MB) and a liquid (here, the cleaning liquid 40) in the reaction cell R0. Hereinafter, the mixing process is referred to as fourth mixing process. Further, the mixed liquid obtained by mixing the cleaning liquid 40 and the magnetic particles MB in the second cleaning process will be referred to as a fourth mixed liquid to be described later. Even in the second cleaning process (Step ST15), the step from magnetic separation to redispersion is repeated a plurality of times (for example, about 3 times). Thereby, the unreacted substance other than the label S applied to the target substance A, which is captured by the magnetic particles MB, is removed. The B/F separation is performed by the second cleaning process, and the magnetic particles MB, the target substance A, which is captured by the magnetic particles MB, and the label S, which is imparted to the target substance A, remain in the reaction cell R0.

The above-mentioned steps are steps of performing a process of imparting the label S to the target substance A in the specimen 22.

Thereafter, the first luminescent reagent 38 accommodated in the cell R3 and the second luminescent reagent 39 accommodated in the cell R4 are added to the reaction cell R0 (Step ST16). Thereby, the magnetic particles MB, the first luminescent reagent 38, and the second luminescent reagent 39 are mixed with one another. In Step ST16 of adding the luminescent reagent, the mixing process of mixing the magnetic particles MB, the first luminescent reagent 38, and the second luminescent reagent 39 is an example of a mixing process of mixing particles (here, the magnetic particles MB) and a liquid (here, the first luminescent reagent 38 and the second luminescent reagent 39) in the reaction cell R0. Hereinafter, the mixing process is referred to as a fifth mixing process. Further, the mixed liquid of the magnetic particles MB, the first luminescent reagent 38, and the second luminescent reagent 39 mixed in the fifth mixing process will be referred to as a fifth mixed liquid to be described later.

The above-mentioned steps are a pre-process performed on the specimen 22 in the reaction cell R0 in the mixing unit 13.

The mixing unit 13 performs the above-mentioned pre-process, and the reagent dispensing unit 13A suctions and discharges various liquids. For example, as described above, the cleaning liquid 40 is suctioned from the cleaning liquid accommodating portion that accommodates the cleaning liquid 40, and the suctioned cleaning liquid 40 is discharged to the reaction cell R0, or each of the reagents is suctioned from each of the cells R1 to R4, and the suctioned reagent is discharged to the reaction cell R0.

The cartridge RC, on which the above-mentioned pre-process is completed, is transported to the detecting unit 15 by the transport unit 13B and is subjected to the detecting process in the detecting unit 15. In the reaction cell R0, the label S, which is imparted to the target substance A, reacts with the first luminescent reagent 38 and the second luminescent reagent 39, which are the luminescent substrates added in the fifth mixing process, to generate chemiluminescence L. The photodetector 50 detects the chemiluminescence L.

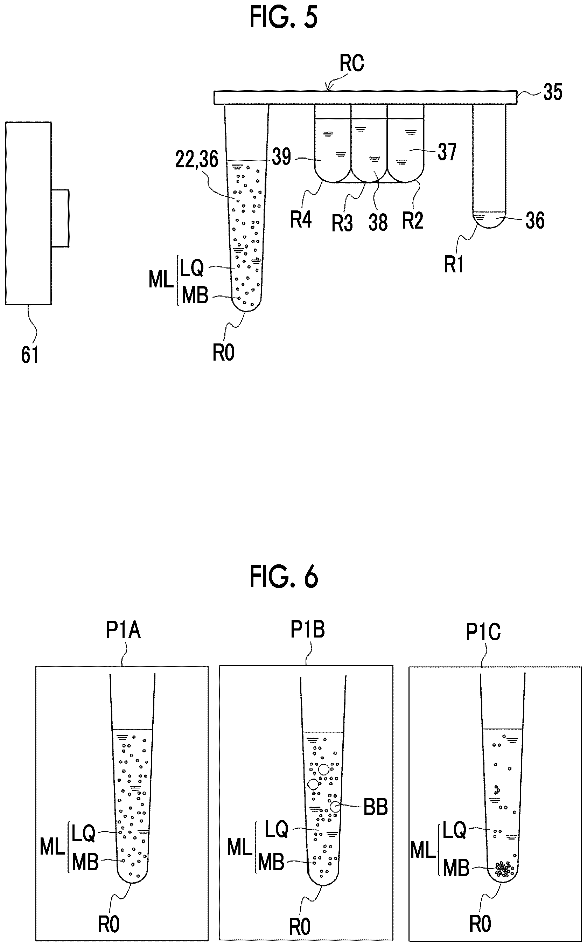

The examination apparatus 10 includes a camera 61 that captures an image of a mixed liquid in which particles (here, magnetic particles MB) and a liquid are mixed in the reaction cell R0. As shown in Fig. 5, the camera 61 is disposed at a position at which an image of the mixed liquid ML in the reaction cell R0 can be captured. As shown in Fig. 5, the camera 61 captures an image of, for example, the magnetic particles MB in Step ST12 and the first mixed liquid including the specimen 22 and the buffer solution 36 as a liquid LQ.

As described above, in the present examination apparatus 10, the mixing unit 13 includes the first to fifth mixing processes as a process of mixing the particles and the liquid. The camera 61 captures an image of the mixed liquid mixed by at least one of the mixing processes. The camera 61 may capture images of all of the first to fifth mixed liquids mixed through the first to fifth mixing processes, or may capture one or two images of some of the mixed liquids. The number of the cameras 61 is not limited to one, and a plurality of cameras may be provided. In a case where the first to fifth mixing processes are performed at different positions of the mixing unit 13, the camera 61 may be disposed at a position at which an image of the reaction cell R0 of the cartridge RC transported to the position, at which each process is performed, can be captured. The camera 61 corresponds to the first camera according to the technology of the present disclosure.

As described above, the camera 61 captures an image of at least one of the first to fifth mixed liquids in the reaction cell R0 in at least one of the steps ST12 to ST16 shown in Fig. 3. Hereinafter, in a case where it is not necessary to distinguish between the first to fifth mixed liquids, the first to fifth mixed liquids will be simply referred to as a mixed liquid ML, and the liquids in the first to fifth mixed liquids will be collectively referred to as a liquid LQ.

The processor 16 determines a state of mixture between the particles (here, the magnetic particles MB) and the liquid LQ, on the basis of the image of the mixed liquid ML captured by the camera 61.

Fig. 6 is a diagram schematically showing images P1A to P1C of the mixed liquid ML captured by the camera 61. The mixed liquid ML in the image P1A is a state where the magnetic particles MB in the mixed liquid ML are uniformly dispersed, and is a state where the state of mixture is favorable. The mixed liquid ML in the image P1B is a state where air bubbles BB are present in the mixed liquid ML and the dispersion of the magnetic particles MB is non-uniform, and is a state where the state of mixture is unfavorable. The mixed liquid ML in the image P1C is a state where the magnetic particles MB in the mixed liquid ML are partially aggregated and the dispersion of the magnetic particles MB is non-uniform, and is a state where the state of mixture is unfavorable.

Fig. 6 visually shows the magnetic particles MB. However, in real situation, the magnetic particles MB each have a size of a submicron to a micron order. Thus, it is difficult to discriminate the individual magnetic particles MB in the mixed liquid ML. In a case where the magnetic particles MB are uniformly dispersed in the mixed liquid ML, the mixed liquid ML has a uniform concentration as a whole. In a case where the dispersion is non-uniform, the mixed liquid has variation in concentration. In the image of the mixed liquid ML, a portion, of which the density of the magnetic particles MB is low, is light in color, and a portion, of which the density of the magnetic particles MB is high, is dark in color. The processor 16 determines the state of mixture of the mixed liquid ML, on the basis of the variation in concentration generated in the image of the mixed liquid ML due to the dispersion of the magnetic particles MB in the mixed liquid.

Further, as shown in the image P1B, in a case where the air bubbles BB are present in the mixed liquid ML, the state of mixture of the mixed liquid ML deteriorates as compared with a case where the air bubbles BB are not present. Further, as the number of air bubbles BB in the mixed liquid ML increases, the state of mixture of the mixed liquid ML deteriorates. Accordingly, in a case where the air bubbles BB are present in the mixed liquid ML, the processor 16 may determine the state of mixture, on the basis of presence or absence of the air bubbles BB or the amount of the air bubbles, in addition to the variation in concentration generated in the image of the mixed liquid ML.

The image analysis method, by which the processor 16 determines whether or not the state of mixture is favorable, is not particularly limited. For example, the concentration value of each pixel may be histogrammed, the number of pixels each having a concentration value greater than a preset threshold value may be counted, and the quality may be determined by the number of counted pixels. The memory 17 records, as the setting information, information necessary for determining whether the state of mixture of the mixed liquid is favorable or unfavorable.

The determination of whether or not the state of mixture is favorable may be performed by using a machine learning model that has been subjected to a learning process using supervised training data in which the determination of whether or not the state of mixture is favorable has been made.

In a case of determining that the state of mixture is favorable, the processor 16 executes the detection of the target substance A performed by the detecting unit 15 after the process in the mixing unit 13. In contrast, in a case where the processor 16 determines that the state of mixture is unfavorable, the processor 16 displays that the state of mixture is unfavorable on the touch panel display 18 and ends the examination.

In a case where the processor 16 determines that the state of mixture of the mixed liquid is unfavorable, the touch panel display 18 displays that the state of mixture is unfavorable. That is, the touch panel display 18 functions as a first notification unit that issues a notification that the state of mixture is unfavorable. In addition, as the first notification unit that issues a notification that the state of mixture is unfavorable, a speaker that issues a notification of an error with a voice, a light emitting unit that issues a notification of an error with luminescence, or the like may be provided.

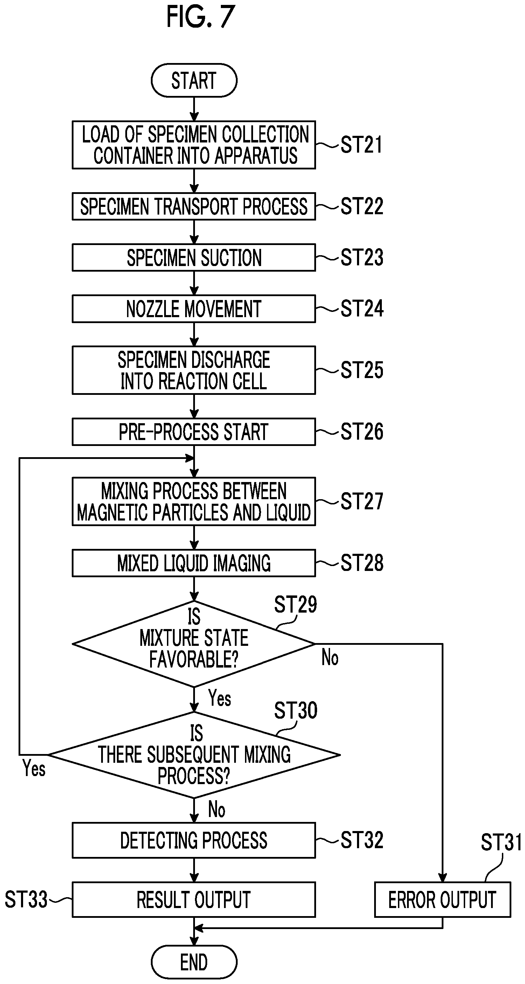

Here, an examination flow according to an example of the examination apparatus 10 will be described with reference to Fig. 7. In the present examination flow, a case where the camera 61 captures an image of each mixed liquid of the first to fifth mixing processes will be described.

A user loads the specimen collection container 20 into the examination apparatus 10 (Step ST21). Then, in a case where the processor 16 receives an instruction to start the examination through the touch panel display 18, the processor 16 starts the process of the examination.

First, the processor 16 transports the specimen collection container 20 to a position at which the sampling nozzle 42 is able to access in the specimen transport unit 12 (Step ST22).

Next, the processor 16 controls the specimen dispensing unit 14 such that the specimen dispensing unit 14 performs the specimen dispensing process (steps ST23 to ST25). First, the sampling nozzle 42 is inserted into the specimen collection container 20 to suction the specimen 22 (Step ST23). In a state where the sampling nozzle 42 holds the specimen 22, the moving mechanism 46 moves the sampling nozzle 42 from the specimen suction position P1 to the specimen discharge position P2 (Step ST24). After the sampling nozzle 42 is moved to the reaction cell R0, which is the specimen discharge position P2, the specimen dispensing unit 14 discharges the specimen 22 to the reaction cell R0 (Step ST25).

The processor 16 controls the mixing unit 13 such that the mixing unit 13 starts the pre-process including the mixing process of mixing the particles and the liquid (Step ST26). Here, the pre-process performed in the mixing unit 13 includes steps ranging from the first reaction (Step ST12) to the luminescent reagent addition (Step ST16) shown in Fig. 3. The first mixing process in the first reaction, the second mixing process in the first cleaning process, the third mixing process in the second reaction, the fourth mixing process in the second cleaning process, and the fifth mixing process in the addition of the luminescent reagent respectively correspond to the mixing processes of the magnetic particles and the liquid in the following description.

The mixing process of the magnetic particles MB and the liquid LQ is performed (Step ST27). In a case of the mixing process, mixing is promoted by repeating the suction and discharge of the mixed liquid by a nozzle that injects the liquid LQ into the reaction cell R0. The processor 16 controls the camera 61 such that the camera 61 captures an image of the mixed liquid ML (Step ST28). Then, the processor 16 determines the state of the mixed liquid ML on the basis of the image captured by the camera 61 (Step ST29).

In a case of determining that the state of the mixed liquid ML is favorable (Step ST29: Yes) and there is the subsequent mixing process (Step ST30: Yes), the processor 16 repeats the steps ST27 to ST29.

In contrast, in a case where the processor 16 determines that the state of the mixed liquid ML is unfavorable (Step ST29: No), the processor 16 outputs a message indicating that the state of mixture is unfavorable to the touch panel display 18 as an error output (Step ST31), and ends the examination.

In a case where there is no subsequent mixing process (Step ST30: No), that is, in a case where the fifth mixing process in the addition of the luminescent reagent is completed, the processor 16 executes the detecting process in the detecting unit 15 (Step ST32). In the detecting unit 15, the photodetector 50 detects the light L caused by a label S generated from the reaction cell R0.

The processor 16 calculates a concentration of the target substance A in the specimen 22 on the basis of the information about the light amount acquired from the photodetector 50. A message indicating the examination result is displayed on the touch panel display 18 (Step ST33), and the examination ends.

In an examination apparatus including a mixing process of particles and a liquid as a process performed on a specimen before the detecting process as in the examination apparatus 10 described above, in a case where the mixing of the particles and the liquid is insufficient, the reliability of the examination result may be reduced.

For example, in the above-mentioned first reaction (Step ST12 in Fig. 3), in a case where the state of mixture of the first mixed liquid is unfavorable, that is, in a case where the magnetic particles MB and the specimen 22 are not sufficiently mixed, the binding between the first binding substance B 1 and the target substance A may be insufficient. Thus, the amount of the target substance A, which is captured by the magnetic particles MB, may be reduced. Therefore, the detection amount of the target substance A obtained as the examination result may be lower than the amount of the target substance A originally included in the specimen 22.

Further, in a case where the state of mixture of the second mixed liquid is unfavorable in the first cleaning process, that is, in a case where the magnetic particles MB and the cleaning liquid 40 are not sufficiently mixed, the unreacted substance non-specifically adsorbed to the magnetic particles MB may not be sufficiently removed. In a case where the unreacted substance remains, the binding of the target substance A and the second binding substance B2 is inhibited in the second reaction of the subsequent step. Thus, the label to be imparted to the target substance A may not be imparted. Therefore, the detection amount of the target substance A obtained as the examination result may be lower than the amount of the target substance A originally included in the specimen 22.

In the second reaction, in a case where the state of mixture of the third mixed liquid is unfavorable, that is, in a case where the magnetic particles MB and the labeling reagent 37 are not sufficiently mixed, the binding of the second binding substance B2 and the target substance A is insufficient. Thus, the amount of the label S, which is imparted to the target substance A captured by the magnetic particles MB, is reduced. Therefore, the detection amount of the target substance A obtained as the examination result may be lower than the amount of the target substance A originally included in the specimen 22.

In the second cleaning process, in a case where the state of mixture of the fourth mixed liquid is unfavorable, that is, in a case where the magnetic particles MB and the cleaning liquid 40 are not sufficiently mixed, the unreacted substance non-specifically adsorbed to the magnetic particles MB may not be sufficiently removed. In a case where the label S other than the label S, which is imparted to the target substance A, remains as an unreacted substance, a luminescence of the unreacted label S is added to a luminescence of the label S originally imparted to the target substance A. Therefore, the detection amount of the target substance A obtained as the examination result may be higher than the amount of the target substance A originally included in the specimen 22.

Further, in a case where the state of mixture of the fifth mixed liquid is unfavorable, that is, in a case where the magnetic particles MB, the first luminescent reagent 38, and the second luminescent reagent 39 are not sufficiently mixed with each other at the time of addition of the luminescent reagent, the reaction between the label and the first luminescent reagent 38 and the second luminescent reagent 39 may be insufficient. Thus, the chemical reaction may not sufficiently occur, and the amount of luminescence may be less than the original amount. Therefore, the detection amount of the target substance A obtained as the examination result may be lower than the amount of the target substance A originally included in the specimen 22.

In such a manner, before the detecting process of detecting the target substance A in the specimen 22, in the mixing process of mixing the particles and the liquid in the process performed on the specimen 22, in a case where the mixing of the specimen and the liquid is not sufficient, the concentration of the target substance A detected in the detecting process may be different from the actual concentration.

However, the examination apparatus 10 of the present embodiment includes the first camera (here, the camera 61) that captures an image of the mixed liquid ML obtained by mixing the particles (here, the magnetic particles MB) and the liquid LQ in the reaction cell R0. Then, the processor 16 determines the state of mixture between the particles and the liquid on the basis of the image of the mixed liquid ML captured by the first camera. In a case of determining that the state of mixture is favorable, the processor 16 executes the detecting process of the detecting unit 15 for the target substance A. In such a manner, in a case of determining that the state of mixture is favorable, the examination apparatus 10 executes the detecting process. Therefore, it is possible to obtain an examination result with high reliability.

As described above, in the present embodiment, the examination apparatus 10 includes the first notification unit (for example, the touch panel display 18) that notifies the user that the state of mixture is unfavorable. Then, in a case where the processor 16 determines that the state of mixture is unfavorable, the processor 16 causes the first notification unit to issue a notification that the state of mixture is unfavorable, and ends the examination. With such a configuration, it is possible to make the user recognize that an error has occurred due to the failure in mixing, and to clarify a countermeasure such as a re-examination.

In a case of determining that the state of mixture is unfavorable, the processor 16 may perform the following process without issuing the notification of the error and ending the examination. For example, in a case where the processor 16 determines that the state of mixture of the mixed liquid in the reaction cell R0 is unfavorable, the processor 16 restarts the suction and discharge of the mixed liquid by the nozzle to promote the mixing of the particles and the liquid. Then, the image of the mixed liquid may be captured again by a first camera 61, the processor 16 may determine the state of mixture, and the mixing and the determination of the state of mixture may be repeated until the state of mixture of the mixed liquid is favorable.

In a configuration in which the processor 16 determines the state of mixture on the basis of the variation in concentration generated in the image of the mixed liquid due to the dispersion of the particles in the mixed liquid, the state of mixture can be easily determined.

The processor 16 may determine the state of mixture on the basis of presence or absence of the air bubbles BB in the mixed liquid ML in the image or the amount of the air bubbles BB in the mixed liquid ML in addition to the variation in concentration generated in the image of the mixed liquid ML. As the number of air bubbles BB in the mixed liquid ML increases, the state of mixture between the particles and the liquid deteriorates. Therefore, the air bubble amount is a parameter for determining whether or not the state of mixture is favorable. The state of mixture can be more accurately determined than in a case of determining the state of mixture only by the variation in concentration.

It should be noted that the processor 16 can also employ an aspect of determining the state of mixture on the basis of presence or absence of the air bubbles BB in the mixed liquid ML or the amount of the air bubbles BB in the image without using the variation in concentration of the image of the mixed liquid.

### "Examination Apparatus according to Second Embodiment"

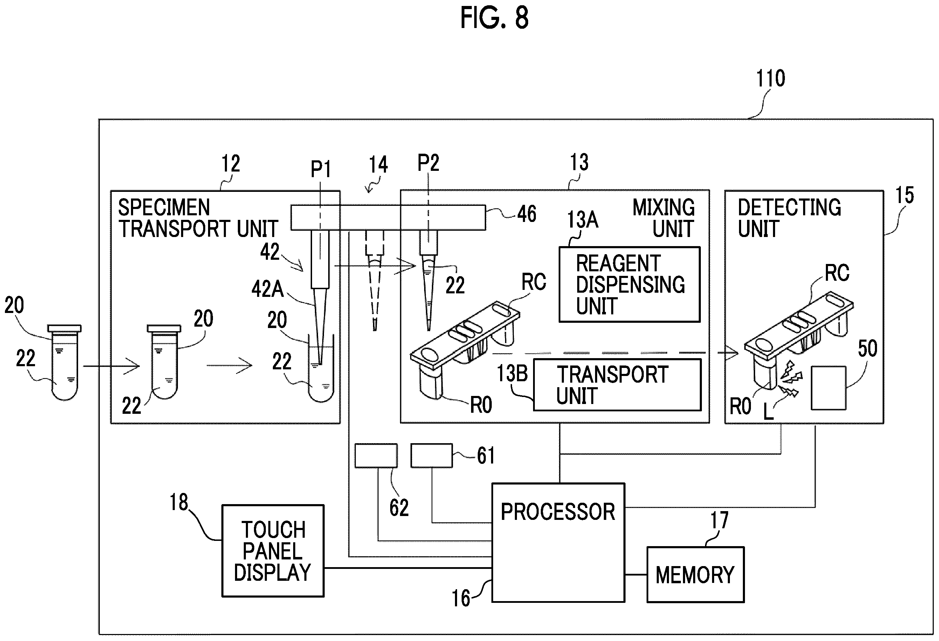

Fig. 8 is a diagram showing a schematic configuration of an examination apparatus 110 according to a second embodiment. The same components in the examination apparatus 10 according to the first embodiment are represented by the same reference numerals, and the detailed description thereof will not be given.

The examination apparatus 110 according to the second embodiment is different from the examination apparatus 10 in that the examination apparatus 110 includes a second camera 62 that captures an image of the sampling nozzle 42 in a state of holding the specimen 22. Here, the second camera 62 is a camera that is provided separately from the camera 61 that captures the image of the mixed liquid (hereinafter, referred to as the first camera 61). The second camera 62 captures the image of the sampling nozzle 42 after the specimen 22 is suctioned through the sampling nozzle 42 and before the specimen 22 is discharged to the reaction cell R0 through the sampling nozzle 42.

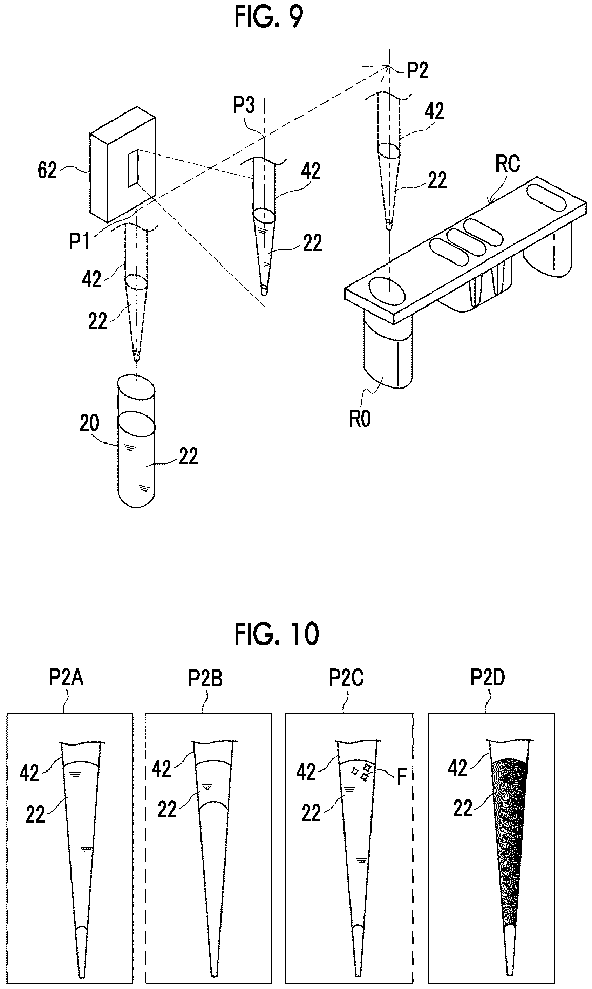

As shown in Fig. 9, the second camera 62 is disposed to be able to capture the image of the sampling nozzle 42 positioned at a position P3 between the specimen suction position P1 at which the specimen 22 is suctioned through the sampling nozzle 42 and the specimen discharge position P2 at which the specimen 22 is discharged. In the present embodiment, the second camera 62 captures the image of the sampling nozzle 42 in a state where the sampling nozzle 42 is moved from the specimen suction position P1 to the specimen discharge position P2.

Then, the processor 16 determines the state of the specimen 22 in the sampling nozzle 42 on the basis of the image of the sampling nozzle 42 captured by the second camera 62. For example, in a case where the processor 16 determines that the state of the specimen 22 is normal, the specimen dispensing unit 14 discharges the specimen 22 to the reaction cell R0. Thereafter, the mixing process in the mixing unit 13 is performed on the specimen 22, and the detecting process in the detecting unit 15 is performed on the specimen 22.

As the determination of the state of the specimen 22, it is determined whether the specimen 22 is in a normal state where the specimen 22 can be used for the detecting process or in an abnormal state. Examples of the parameter for determining that the state of the specimen 22 is normal include the following (1) to (3).
(1) An amount (suction amount) of the suctioned specimen 22 satisfies a prescribed value.
(2) No foreign substance is mixed into the specimen 22.
(3) There is no hemolysis, jaundice, or chyle in the specimen 22.

The processor 16 determines that the state of the specimen 22 is normal in a case where all of (1) to (3) are satisfied as an example, and determines that the state of the specimen 22 is abnormal (the specimen 22 is abnormal) in a case where at least one of (1) to (3) is not satisfied. However, the normal determination parameter can be appropriately set in accordance with an examination item or the examination apparatus, and it can be determined that the state is normal in a case where (1) is satisfied, or it can be determined that the state is normal in a case where (1) and (2) are satisfied. Further, parameters other than (1) to (3) can also be adopted.

Fig. 10 is a diagram schematically showing images P2A to P2D of the sampling nozzles 42 captured by the second camera 62. The specimen 22 in the image P2A is in a normal state where the suction amount satisfies the prescribed value and no foreign substance or the like is mixed therein. The specimen 22 in the image P2B is in an abnormal state where the suction amount is less than the prescribed value. The specimen 22 in the image P2C is in an abnormal state where the specimen 22 includes the foreign substance F. The specimen 22 in the image P2D is in an abnormal state where hemolysis has occurred.

Examples of the method of determining whether or not the suction amount satisfies the prescribed value include a method of obtaining an upper end position, a lower end position, and a distance between the upper and lower ends of the specimen 22 from an image of the sampling nozzle 42 holding the specimen 22, calculating the suction amount from the values, and determining that the suction amount is normal in a case where the calculated suction amount is equal to or greater than the prescribed value and the suction amount is abnormal in a case where the calculated suction amount is less than the prescribed value. The upper end position and the lower end position of the specimen 22 can be detected, for example, from fluctuation in luminance value in the length direction (up-down direction) of the sampling nozzle 42. The memory may store, in advance, the prescribed value of the suction amount as the setting information. The prescribed value is set to a necessary amount for performing the detecting process, for example, 25 µL.

Examples of the method of determining whether or not a foreign substance is mixed into the specimen 22 include a method of detecting fluctuation in luminance value in the length direction (up-down direction) of the sampling nozzle 42 in the image of the sampling nozzle 42 holding the specimen 22 and determining that there is a foreign substance in a case where there is a portion in which the predetermined fluctuation in luminance value in the specimen 22 is equal to or greater than a threshold value and determining that there is no foreign substance in a case where there is no portion in which fluctuation is equal to or greater than the threshold value.

In a case where the specimen 22 is blood, a centrifugal separation process is performed, and a serum is used for the examination, the serum is originally a yellow transparent liquid. In contrast, in a case where the specimen 22 is hemolysis, a color of the specimen 22 is redder than that in a normal case. In a case of jaundice, the color of the specimen 22 is darker yellow than that in the normal case. Further, in a case of chyle, the color of the specimen 22 is more turbid than that in the normal case. Therefore, examples of the method of determining presence or absence of hemolysis, jaundice, and chyle in the specimen 22 include a method of determining presence or absence of hemolysis, jaundice, and chyle in the specimen 22 on the basis of the color of the specimen 22 in the image of the sampling nozzle 42 holding the specimen 22.

In a case where the processor 16 determines that the state of the specimen 22 is abnormal (the specimen 22 is abnormal), that is, in a case where the processor 16 determines that at least one of (1) to (3) is not satisfied, the processor 16 displays information indicating that the state of the specimen 22 is abnormal on the touch panel display 18. The touch panel display 18 functions as a second notification unit that notifies the user that the state of the specimen 22 is abnormal. As the second notification unit that issues the notification in a case where the state of the specimen 22 is abnormal, a speaker that issues a notification of an error by voice, a light emitting unit that issues a notification of an error by emitting light, or the like may be provided.

In a case where the processor 16 determines that the state of the specimen 22 is abnormal, the processor 16 displays information indicating that the state of the specimen 22 is abnormal on the touch panel display 18 and ends the examination of the specimen 22.

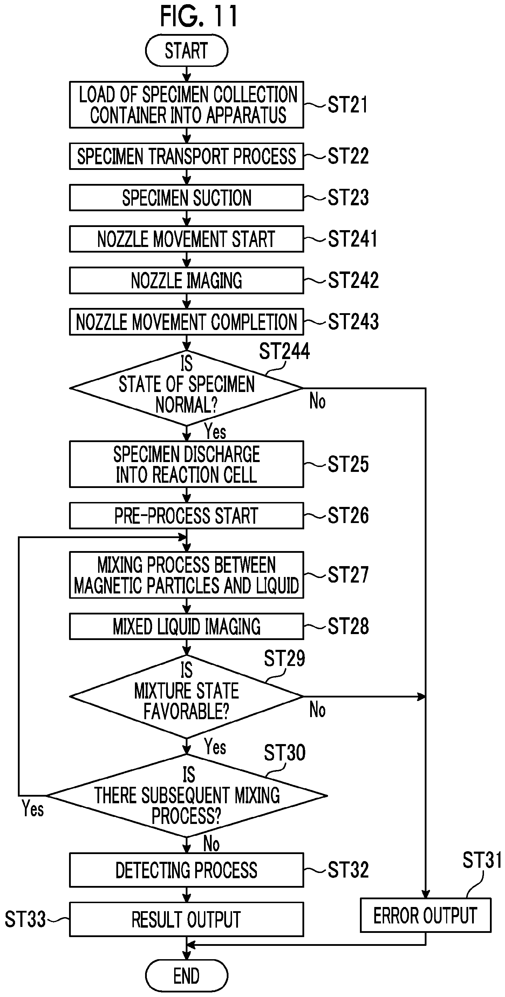

An example of an examination flow in the examination apparatus 110 will be described with reference to Fig. 11. The same steps as the examination flow described with reference to Fig. 7 for the examination apparatus 10 are represented by the same reference numerals. Here, points different from the examination flow of Fig. 7 will be mainly described.

The steps from the loading of the specimen collection container 20 on the examination apparatus 110 (Step ST21) to the suction of the specimen 22 by the specimen dispensing unit 14 (Step ST23) via the transportation of the specimen collection container 20 by the specimen transport unit 12 (Step ST22) are the same as the steps in the examination flow in the examination apparatus 10. On the other hand, the steps from the end of the suction of the specimen 22 by the specimen dispensing unit 14 to the movement of the sampling nozzle 42 and the specimen discharge into the reaction cell R0 are different from the examination apparatus 10.

The movement of the sampling nozzle 42, through which the specimen 22 is suctioned, is started (Step ST241). While the sampling nozzle 42 is moving, the processor 16 controls the second camera 62 such that the second camera 62 captures the image of the sampling nozzle 42 (Step ST242). The sampling nozzle 42 is moved to the specimen discharge position P2 on the reaction cell R0 to complete the movement of the nozzle (Step ST243). The processor 16 determines the state of the specimen 22 on the basis of the image of the sampling nozzle 42 holding the specimen 22 acquired by the second camera 62. In a case where it is determined that the state of the specimen 22 is normal (Step ST244: Yes), the specimen 22 is discharged from the sampling nozzle 42 to the reaction cell R0 (Step ST25). The subsequent steps are the same as the examination flow in the examination apparatus 10.

In contrast, in a case where the processor 16 determines that the state of the specimen 22 is abnormal (Step ST244: No), the processor 16 outputs a message indicating that the state of the specimen 22 is abnormal as the error output (Step ST31) and ends the examination.

In the examination apparatus that executes the detecting process of detecting the target substance in the specimen, such as the examination apparatuses 10 and 110, in a case where the specimen to be examined is abnormal, the reliability of the examination result may be reduced.

For example, in a case where the suction amount of specimen 22 suctioned into the sampling nozzle 42 is less than the prescribed value, the amount of specimen 22 to be discharged to the reaction cell R0 is less than the prescribed value. In a case where the amount of specimen is small, the amount of the target substance A in the specimen is also relatively small. In a case where the concentration with respect to the specimen 22 of the specified amount is output as the examination result, a concentration lower than the original concentration is likely to be output as the detection result.

Further, in a case where a foreign substance is mixed into the specimen 22 suctioned into the sampling nozzle 42, the binding between the target substance A and the first binding substance B1 in the first reaction may be inhibited, and the amount of the target substance A, which is captured by the magnetic particles MB, is likely to be less than the original amount. Therefore, the detection amount of the target substance A obtained as the examination result may be lower than the amount of the target substance A originally included in the specimen 22.

In a case where the specimen 22 suctioned into the sampling nozzle 42 is hemolyzed, chylified, or jaundiced, it means that an extra component is mixed therein. Thus, the detection result may be affected in accordance with the type of the target substance A.

In such a manner, in a case where the state of the specimen 22 is abnormal, the concentration of the target substance A detected by the detecting process may be different from the actual concentration.

However, as described above, the examination apparatus 110 according to the second embodiment includes the second camera 62 that captures the image of the sampling nozzle 42 in a state of holding the specimen 22. The processor 16 determines the state of the specimen 22 to determine that the state of the specimen 22 is normal. With such a configuration, it is possible to exclude the specimen 22 from which an examination result with high accuracy cannot be obtained in a case where the specimen 22 is abnormal. As a result, it is possible to improve the reliability of the examination result.

As described above, even in a case where it is determined that the state of the specimen 22 is abnormal, for example, in a case where the type of the abnormality is hemolysis, jaundice, or chyle, the examination item (type of the target substance A) may not be affected. Therefore, even in a case of determining that the state of the specimen 22 is abnormal, the processor 16 may continue to perform the mixing process and the detecting process without ending the examination. In such a case, in a case where the processor 16 outputs the examination result, the processor 16 may add a display indicating that the abnormality has occurred in the specimen 22, specifically, hemolysis, jaundice, or chyle.

As in the examination apparatus 110 of the above-mentioned embodiment, the processor 16 may be configured to discharge the specimen 22 from the sampling nozzle 42 into the reaction cell R0 in a case where the processor 16 determines that the state of the specimen 22 is normal. In such a case, it is possible to reliably exclude the specimen 22 which is abnormal from the examination.

In the examination apparatus 110, the second camera 62 captures the image of the sampling nozzle 42 which is being moved by the moving mechanism 46. However, the second camera 62 may capture the image of the sampling nozzle 42 in a stationary state. However, in a case where the second camera 62 captures the image of the sampling nozzle 42 which is being moved by the moving mechanism 46, the time for stopping the sampling nozzle 42 for imaging is not necessary. Therefore, the throughput can be increased.

Further, the second camera 62 may be disposed at a position, at which the image of the sampling nozzle 42 can be captured, in a case where the sampling nozzle 42 is positioned at the suction position P1 or in a case where the sampling nozzle 42 is positioned at the specimen discharge position P2.

The second camera 62 may be an area scan camera or a line scan camera. By using the second camera 62 as the line scan camera, reduction in costs can be achieved. In particular, in a case of capturing the image of the sampling nozzle 42 during movement, a camera having high accuracy is necessary. Therefore, there is a high cost reduction effect in a case of using the line scan camera.

In the cartridge RC used in the examination apparatuses 10 and 110 according to the above-mentioned embodiments, an enzyme is used as the label S, and the detecting unit 15 is configured to detect the luminescence generated by the reaction between the enzyme and the luminescent reagent. However, the label S is not limited to the enzyme and may be a fluorescent label such as a fluorescent dye or fluorescent beads. In a case where the label S is a fluorescent label, the detecting unit 15 may be provided with an excitation light source that irradiates the fluorescent label with excitation light and a photodetector that detects fluorescence generated from the fluorescent label.

The examination apparatuses 10 and 110 according to the above-mentioned embodiments each are configured to use the magnetic particles MB as the solid phase for B/F separation, determine the state of mixture between the magnetic particles MB and the liquid, and execute the detection of the target substance in a case where the state of mixture is favorable. The technology of the present disclosure can be applied without any limitation to an examination apparatus including a mixing unit that executes a mixing process of mixing particles and a liquid, in which the particles are not limited to the magnetic particles MB.

In each of the above-mentioned embodiments, as hardware structures of processing units that execute various types of process as the internal configuration of the processor 16, the following various processors can be used. The various processors include, for example, a CPU which is a general-purpose processor executing software to function as various processing units as described above, a programmable logic device (PLD), such as a field programmable gate array (FPGA), which is a processor whose circuit configuration can be changed after manufacture, or a dedicated electric circuit, such as an application specific integrated circuit (ASIC), which is a processor having a dedicated circuit configuration designed to perform a specific process.

One processing unit may be configured by one of the various types of processors or may be configured by a combination of two or more processors of the same type or different types (for example, a combination of a plurality of FPGAs and/or a combination of a CPU and an FPGA). The plurality of processing units may be configured of one processor.

As an example of configuring the plurality of processing units with one processor, first, there is a form in which one processor is configured by a combination of one or more CPUs and software and the processor functions as the plurality of processing units, as represented by computers such as a client and a server. A second example of the configuration is an aspect in which a processor that implements the functions of the whole system including a plurality of processing units using one integrated circuit (IC) chip is used. A representative example of this aspect is a system-on-chip (SoC). As described above, the various processing units are configured using one or more of the various processors as the hardware structure.

More specifically, a circuitry combining circuit elements such as semiconductor elements may be used as the hardware structure of the various processors.

The present disclosure is not limited to the above-mentioned embodiments, and can be implemented with appropriate modifications, such as omitting a configuration or replacing a configuration with a different configuration within the scope that does not deviate from the gist of the present disclosure.

The disclosure of JP2022-043028 filed on March 17, 2022 is incorporated herein by reference in its entirety.

All documents, patent applications, and technical standards described in the present specification are incorporated into the present specification by reference to the same extent as in a case where the individual documents, patent applications, and technical standards were specifically and individually stated to be incorporated by reference.

## Claims

1. An examination apparatus comprising:
a detecting unit that executes a detecting process of detecting a target substance in a specimen;
a mixing unit that executes a mixing process of mixing particles and a liquid in a reaction cell, the mixing process being performed on the specimen to be provided to the detecting process before the detecting process;
a first camera that captures an image of a mixed liquid obtained by mixing the particles and the liquid in the reaction cell; and
a processor that determines a state of mixture between the particles and the liquid on the basis of the image of the mixed liquid captured by the first camera,
wherein the processor is configured to execute the detecting process of the target substance using the detecting unit in a case of determining that the state of mixture is favorable.

2. The examination apparatus according to claim 1, further comprising:
a first notification unit that notifies a user that the state of mixture is unfavorable,
wherein the processor is configured to cause the first notification unit to notify the user that the state of mixture is unfavorable and to end an examination in a case of determining that the state of mixture is unfavorable.

3. The examination apparatus according to claim 1 or 2,
wherein the processor is configured to determine the state of mixture on the basis of variation in concentration which is generated in the image of the mixed liquid in accordance with dispersion of the particles in the mixed liquid.

4. The examination apparatus according to claim 3,
wherein the processor is configured to determine the state of mixture on the basis of whether or not air bubbles are present in the mixed liquid in the image or an amount of the air bubbles in addition to the variation in concentration which is generated in the image of the mixed liquid.

5. The examination apparatus according to claim 1 or 2,
wherein the processor is configured to determine the state of mixture on the basis of whether or not air bubbles are present in the mixed liquid in the image or an amount of the air bubbles.

6. The examination apparatus according to any one of claims 1 to 5,
wherein the particles are magnetic particles.

7. The examination apparatus according to any one of claims 1 to 6, further comprising:
a specimen dispensing unit that has a sampling nozzle through which the specimen is suctioned and the specimen is discharged to the reaction cell; and
a second camera that captures an image of the sampling nozzle in a state of holding the specimen after the specimen is suctioned through the sampling nozzle and before the specimen is discharged to the reaction cell,
wherein the processor is configured to determine a state of the specimen in the sampling nozzle on the basis of the image of the sampling nozzle captured by the second camera.

8. The examination apparatus according to claim 7,
wherein the processor is configured to cause the sampling nozzle to discharge the specimen into the reaction cell in a case of determining that the state of the specimen is normal.

9. The examination apparatus according to claim 7 or 8, further comprising:
a second notification unit that notifies a user that the state of the specimen is unfavorable,
wherein the processor is configured to cause the second notification unit to notify the user that the state of the specimen is unfavorable in a case of determining that the state of the specimen is unfavorable.

10. The examination apparatus according to any one of claims 7 to 9,
wherein the specimen dispensing unit includes a moving mechanism that moves the sampling nozzle from a suction position for suctioning the specimen to a discharge position for discharging the specimen to the reaction cell, and
the second camera captures an image of the sampling nozzle which is being moved by the moving mechanism.

11. The examination apparatus according to any one of claims 7 to 10,
wherein the second camera is a line scan camera.

12. The examination apparatus according to any one of claims 1 to 10,
wherein the detecting unit detects the target substance by detecting luminescence or fluorescence from a label attached to the target substance using an antigen-antibody reaction.
